# EUROPÄISCHE PATENTANMELDUNG

(11) **EP 0 987 515 A2**
(43) Veröffentlichungstag der Anmeldung: **22.03.2000**
(21) Anmeldenummer: 99113893.4
(22) Anmeldetag: 16.07.1999
(51) Int. Cl.: G01B 5/004

(54) **Aufsatzelement und Vorrichtung zur Positionsbestimmung oder Ausmessung eines Loches oder eines Bolzens**

(30) Priorität: 17.09.1998 DE 19842630
(71) Anmelder: DaimlerChrysler AG, 70567 Stuttgart (DE)
(72) Erfinder: Schamal, Axel, 71034 Böblingen (DE)

(57) **Zusammenfassung**

Aufsatzelement zur Positionsbestimmung oder Ausmessung eines an einem Bauteil ausgebildeten Loches oder Bolzens, insbesondere eines Schweißbolzens oder Gewindebolzens, welches auf einer ersten Seite des Bauteils auf eine das Loch oder den Bolzen umgebende Bauteiloberfläche aufbringbar ist, wobei das Aufsatzelement ein mit einer von einer zweiten Seite des Bauteils in das Loch einbringbaren Fixierschraube zur Fixierung des Aufsatzelementes an dem Bauteil unter Einklemmung des Bauteils zwischen dem Aufsatzelement und der Fixierschraube bzw. mit dem Bolzen oder einer dem Außendurchmesser des Bolzens angepaßten Fixierbuchse verschraubbares Innengewinde aufweist.

## Beschreibung

Die vorliegende Erfindung betrifft ein Aufsatzelement und eine Vorrichtung zur Positionsbestimmung oder Ausmessung eines Loches oder eines Bolzens nach dem Oberbegriff des Patentanspruches 1, bzw. nach dem Oberbegriff des Patentanspruches 8 und dem Oberbegriff des Patentspruches 10.

Bei zahlreichen technischen Anwendungen ist es notwendig, zur Ausmessung eines Bauteils die genauen Positionen bzw. Abstände einer Anzahl von in dem Bauteil ausgebildeten Löchern und/oder Schweiß- oder Gewindebolzen zu bestimmen. Beispielsweise auf der Gebiet der meßtechnischen Überwachung von Rohbaukarossen sowie deren Untergruppen, wie etwa Blechanbauteilen oder Einzelteilen, sind derartige Ausmessungen häufig durchzuführen. Als schwierig erweist sich hierbei, daß Löcher bzw. Bolzen oder deren Mittelpunkte nicht unmittelbar zugänglich sind, so daß sich genaue Messungen sehr aufwendig gestalten. Ferner sind die Abmessungen von Löchern oftmals mit Toleranzen behaftet, so daß es zweckmäßig ist, die Lochmittelpunkte zu bestimmen. Auch die herkömmliche Ausmessung von Schweiß- oder Gewindebolzen ist mit großen Meßfehlern behaftet. Es muß eine große Anzahl von Einzelmessungen bzw. Refferierungen durchgeführt werden, um über entsprechende Lot- und Schnittberechnungen einen entsprechenden Mittelpunkt zu berechnen. Bei Verwendung eines Meßtasters an Gewindeschrauben tritt die Schwierigkeit auf, daß der Meßtaster in der Regel nicht den höchsten Punkt der Gewindesteigung trifft, so daß auch hier große Fehler auftreten.

Aus der DE-PS 936 895 ist eine Vorrichtung zum Messen von Abständen an einem Gegenstand bekannt, welche in ein Loch des zu messenden Gegenstandes eingeführt wird. Die Vorrichtung besteht aus zwei getrennten Teilen, nämlich einem Schaft zum Einpassen in das Loch des Gegenstandes und einem Teil, welches in einer Kugel eines bestimmten Krümmungsradius endet. Diese Kugel ist derart positionierbar, daß sie als Bezugspunkt bezüglich des Mittelpunktes des Loches dient. Als nachteilig bei dieser Vorrichtung wird angesehen, daß in das zu vermessende Loch lediglich ein Stift eingeführt wird, welcher innerhalb des Loches nicht vollständig fixierbar ist. Dies führt bei der Ausmessung zu Meßfehlern.

Aus der DE-PS 733 370 ist eine Einrichtung zur Messung von Abständen von Anschlußpunkten, insbesondere nicht direkt meßbarer Punkte, wie Kugelmitten, bekannt, welche aus einem Hauptmaßstab mit längsverstellbaren Schieberkörpern und in diesen quer zum Hauptmaßstab verschiebbaren Meßgliedern besteht. Diese verhältnismäßig groß bauende Einrichtung ist beispielsweise für Messungen an unzugänglichen Stellen ungeeignet.

Das deutsche Gebrauchsmuster G 91 06 101 offenbart einen Präzisionsmeßstab, welcher durch Einstecken eines Dorns in eine Öffnung eine Messung des Durchmessers der Öffnung gestattet. Die genaue Positionsbestimmung der Öffnung ist nicht Gegenstand der in dieser Druckschrift beschriebenen Lehre.

Aufgabe der vorliegenden Erfindung ist die Schaffung einer Vorrichtung, mit der eine präzise und unaufwendige Positionsbestimmung bzw. Ausmessung von Löchern oder von Schweiß- oder Gewindebolzen eines Bauteils in einfacher Weise möglich ist.

Diese Aufgabe wird gelöst durch ein Aufsatzelement mit den Merkmalen des Patentanspruches 1 sowie eine Vorrichtung mit den Merkmalen des Patentanspruches 8 bzw. den Merkmalen des Patentspruches 10.

Erfindungsgemäß sind nun ein Aufsatzelement bzw. Vorrichtungen geschaffen, mit denen die genaue Positionsbestimmung von Löchern oder Ausnehmungen bzw. Schweiß- oder Gewindebolzen, beispielsweise an einer Karosserie eines Kraftfahrzeuges, in einfacher Weise durchführbar ist. Die erfindungsgemäßen Aufsatzelemente sind in flexibler Weise sowohl zur Ausmessung von Löchern als auch von Gewindebolzen einsetzbar. Auch Messungen an unzugänglichen Stellen, beispielsweise dem Bodenblech einer Fahrzeugkarosserie, sind problemlos möglich. Das erfindungsgemäße Aufsatzelement zeichnet sich durch geringe Herstellungskosten sowie schnelle Montierbarkeit und Demontierbarkeit aus. Anpassungen an unterschiedliche Gewindesteigungen können in einfacher Weise durch eine entsprechende Ausgestaltung des Innengewindes des Aufsatzelements vorgenommen werden.

Bei Verwendung einer erfindungsgemäßen Vorrichtung zur Positionsbestimmung oder Ausmessung eines Loches gemäß Anspruch 8 werden das Aufsatzelement und die Fixierschraube von entgegengesetzten Seiten des Loches auf dieses aufgebracht bzw. in dieses eingebracht und miteinander verschraubt. Hierdurch ist eine positionsgenaue Klemmfixierung der Vorrichtung bzw. des Aufsatzelementes an dem Bauteil erzielbar.

Bei Verwendung einer erfindungsgemäßen Vorrichtung zur Positionsbestimmung oder Ausmessung eines Bolzens an einem Bauteil gemäß Anspruch 10 ist eine Fixierbuchse, welche dem Außendurchmesser des Bolzens entspricht, in das Innengewinde des Aufsatzelements einschraubbar. Die Montage und Demontage erfolgt durch Aufstecken und Abziehen auf den bzw. von dem zu messenden Bolzen. Hier erweist sich als besonders vorteilhaft, einen magnetischen Einsatz in dem Aufsatzelement vorzusehen, welcher einen guten Festsitz um den Bolzen herum gewährleistet. Das Aufsatzelement kann gerändelt ausgebildet sein, wodurch eine besonders einfache Demontage des aufsatzelements möglich ist. Durch einen flexiblen Wechsel der Fixierbuchsen unterschiedlicher Innendurchmesser können mit einem Aufsatzelement verschiedene Bolzendurchmesser gemessen werden, wodurch dem Aufsatzelement eine adapterartige Funktion zukommt. Der Wechsel der Fixierbuchse ist beispielsweise mittels eines Schraubendrehers durchführbar. Als besonders vorteilhaft erweist sich ein Härten der Fixierbuchse, so daß Abnutzungen des FixierbuchsenInnendurchmessers vermieden werden können, wodurch eine hohe Haltbarkeit gewährleistet ist.

Vorteilhafte Ausgestaltungen der Erfindung sind Gegenstand der Unteransprüche.

Gemäß einer bevorzugten Ausgestaltung des erfindungsgemäßen Aufsatzelements weist dieses eine im wesentlichen halbkugelförmige oder teilkugelförmige Außenkontur bzw. Form auf. Die Vermessung derartiger halbkugel- oder teilkugelförmiger Elemente erweist sich als besonders einfach und unaufwendig. Beispielsweise kann ein zu vermessender Bolzen bezüglich seiner Position in allen Richtungen bis zu 5 mm von seiner Sollposition abweichen, ohne daß ein CNC-Serienmeßablauf beim Messen der Kugel mit Kollision unterbrochen wird. Die Verfahrensschritte im CNC-Ablauf einer Kugelausmessung sind immer die gleichen. Das Element Kugel kann beim Programmieren immer gespiegelt werden, sofern die Lage der Bolzen zueinander in der Schräge nicht gravierend voneinander abweichen. Insbesondere bei der Vermessung derartiger Kugelformen erweist sich der gute Festsitz des Aufsatzelements als vorteilhaft. Die Rundheit des Aufsatzelements und die genaue Zentrierung des Innengewindes bestimmt in sehr genauer Weise den Mittelpunkt eines zu vermessenden Bolzens und vermittelt somit den Ist-Zustand des Bolzens auf der dazugehörigen Bauteilfläche. Es sei angemerkt, daß das erfindungsgemäße Aufsatzelement auch eckig, insbesondere als Sechskant oder Achtkant, ausgebildet sein kann. Bevorzugte Werkstoffe für das Aufsatzelement sind Kunststoffe, Metalle oder andere geeignete Materialien. Durch Verwendung magnetischer Werkstoffe kann beispielsweise ein Haften des Aufsatzelements an einem Bauteil auch vor seiner Verschraubung mit einem Bolzen oder einer Schraube gewährleistet werden. Als praktisch vorteilhaft einsetzbar erweisen sich insbesondere Halbkugelformen mit Durchmessern von 15-35 mm.

Zweckmäßigerweise weist das Aufsatzelement an seiner Unterseite einen Auflagering auf. Hierdurch ist gewährleistet, daß das Aufsatzelement auch bei Vorliegen von Unebenheiten der Bauteiloberfläche in Loch- oder Bolzennähe (beispielsweise bedingt durch Schweißspritzer, Stanzgrate oder Bolzenfüße) satt auf dem Bauteil aufliegen kann. Ein derartiger Auflagering kann beispielsweise eine Ringdicke von 2mm bei einem Ringinnendurchmesser von 17mm aufweisen.

Gemäß einer bevorzugten Ausführungsform weist das Aufsatzelement an seiner Unterkante eine Fase auf. Eine derartige Fase, welche vorzugsweise einen Winkel von etwa 45° aufweist, gewährleistet ein verletzungsfreies An- und Abschrauben sowie eine gute Handhabung des erfindungsgemäßen Aufsatzelements durch einen Benutzer.

Es ist gemäß einer weiteren zweckmäßigen Ausführungsform vorgesehen, daß das Innengewinde bezüglich des Aufsatzelements asymmetrisch angeordnet ist. Mit dieser Maßnahme ist es möglich, Löcher oder Bolzen an unzugänglichen Kantenbereichen oder im Auslauf von Rundungen eines Bauteils zu vermessen. Im Falle einer halbkugelförmigen oder teilkugelförmigen Außenkontur des Aufsatzelementes ist eine derartige asymmetrische Ausbildung beispielsweise mittels einseitigen oder beidseitigen Abfräsens des Aufsatzelementes erreichbar.

Gemäß einer vorteilhaften Ausgestaltung des erfindungsgemäßen Aufsatzelements ist das Innengewinde als Durchgangsgewinde ausgebildet. Hierdurch ist es möglich, Bolzen oder Schrauben beliebiger Länge unter Verwendung des erfindungsgemäßen Aufsatzelements zu vermessen.

Zweckmäßigerweise weist das Aufsatzelement einen Einsatz, insbesondere einen ringförmigen Einsatz, aus einem magnetischen Material auf. Ein derartiger Einsatz gewährleistet insbesondere bei Verwendung des Aufsatzelementes zusammen mit einer auf einen Bolzen aufschiebbaren Fixierbuchse einen guten Festsitz am Bolzen, wodurch eine große Meßgenauigkeit erzielbar ist.

Gemäß einer bevorzugten Ausführungsform der Vorrichtung zur Positionsbestimmung oder Ausmessung eines Loches weist die Fixierschraube einen konisch zulaufenden Abschnitt auf. Mittels eines derartigen konusförmigen Abschnitts ist eine besonders sichere und positionsgenaue Fixierung der Fixierschraube in einem Loch möglich.

Bevorzugte Ausführungsformen des erfindungsgemäßen Aufsatzelements bzw. der erfindungsgemäßen Vorrichtung werden nun anhand der beigefügten Zeichnung im einzelnen beschrieben.

Es zeigt
- Fig. 1: eine seitliche Schnittansicht einer ersten bevorzugten Ausführungsform des erfindungsgemäßen Aufsatzelements,
- Fig. 2: eine explodierte seitliche Schnittansicht einer bevorzugten Ausführungsform der erfindungsgemäßen Vorrichtung zur Ausmessung bzw. Positionsbestimmung eines Loches,
- Fig. 3: eine seitliche Schnittansicht einer weiteren bevorzugten Ausführungsform des Aufsatzelements bzw. der Vorrichtung in montierter Stellung,
- Fig. 4: eine seitliche Schnittansicht einer weiteren bevorzugten Ausführungsform des erfindungsgemäßen Aufsatzelements, und
- Fig. 5: eine seitliche Schnittansicht einer bevorzugten Ausführugnsform einer erfindungsgemäßen Vorrichtung zur Positionsbestimmung oder Ausmessung eines Bolzens.

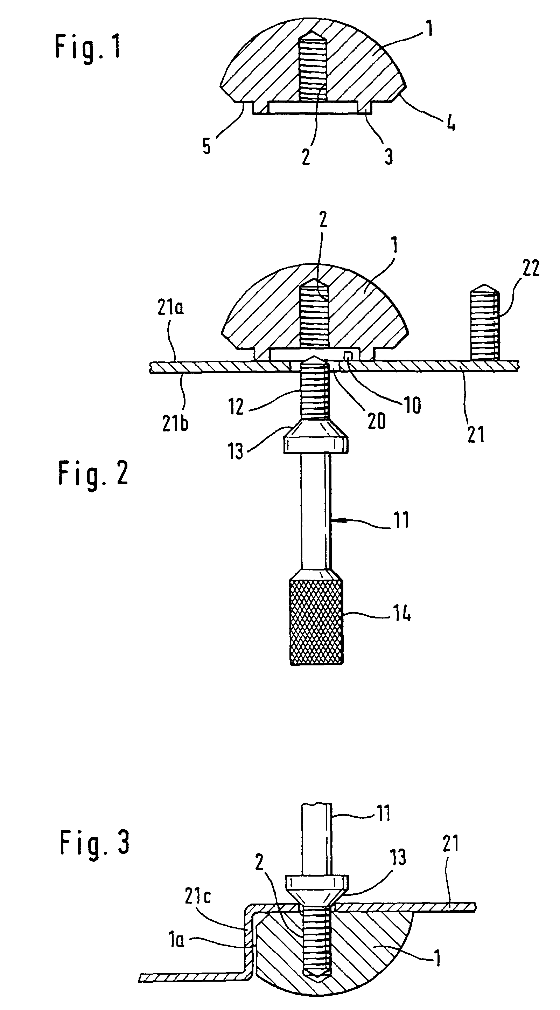

Das in Fig. 1 dargestellte Aufsatzelement 1 weist eine im wesentlichen halbkugelförmige Kontur auf. Mittig innerhalb des Aufsatzelements 1 ist eine mit einem Innengewinde 2 ausgebildete Ausnehmung vorgesehen. Das Aufsatzelement 1 weist ferner auf seiner Unterseite 5 einen Auflagering 3 auf. Mittels eines derartigen Auflagerings 3 kann das Aufsatzelement 1 auch bei Vorliegen von Unebenheiten 10 (siehe Fig. 2, in der beispielhaft ein Schweißspriter 10 dargestellt ist) lotrecht auf einem Bauteil positioniert werden. Der Unterkantenbereich des Aufsatzelements 1 ist mit einer Fase 4 ausgebildet, welche der einfachen und sicheren Handhabung des Aufsatzelements dient. Die Fase 4 weist bevorzugt einen Winkel von 45° bezüglich der Unterseite 5 des Aufsatzelements 1 auf.

Anhand der Figuren 2 und 3 soll die Verwendung des Aufsatzelements 1 bei einer Vorrichtung zur Ausmessung bzw. PositionsbeStimmung eines Loches 20 in einem Bauteil 21, insbesondere einem Karosseriebauteil eines Kraftfahrzeugs, erläutert werden. Das Aufsatzelement ist in analoger Weise zur Ausmessung bzw. Positionsbestimmung eines auf dem Bauteil 21 vorgesehenen Bolzens 22, wie er in Fig. 2 rechts dargestellt ist, verwendbar.

Das Aufsatzelement 1 wirkt mit einem Gewindestift bzw. einer Fixierschraube 11 zusammen. Diese Fixierschraube 11 ist an ihrem oberen Ende mit einem Gewinde 12 ausgebildet, welches mit dem Innengewinde 2 verschraubbar ist. An das Gewinde 12 schließt sich ein konusförmiger Abschnitt 13 an. Der untere Bereich 14 der Fixierschraube 11 ist gerändelt ausgebildet, wodurch die Handhabung erleichtert ist.

Das Aufsatzelement 1 und die Fixierschraube 11 werden von entgegengesetzten Seiten an das Loch 20 herangeführt. Hierbei wird das Aufsatzelement 1 auf eine erste Seite 21a des Bauteils 21 aufgebracht. Das Aufsatzelement 1 ist hierbei auf die das Loch 20 umgebende Oberfläche des Bauteils 21 auflegbar. Die Fixierschraube 11 wird von einer zweiten Seite 21b des Bauteils 21 in das Loch 20 eingeführt. Anschließend werden Gewinde 12 und Innengewinde 2 unter Einklemmung des Bauteils 21 miteinander verschraubt. Hierbei beaufschlagt der konusförmige Abschnitt 13 die Unterseite des Loches 20 bzw. des Bauteils 21 und sorgt so für eine optimale Zentrierung der Fixierschraube 11 in dem Loch 20. Nach Verschraubung der Bauteile 1, 11 miteinander ist eine positionsgenaue Fixierung des Aufsatzelements 1 bezüglich des Loches 20 gewährleistet. Die Vermessung des Aufsatzelementes 1 zur Positionsbestimmung des Loches 20 erfolgt in an sich bekannter Weise .

In Fig. 3 ist eine weitere bevorzugte Ausführungsform des Aufsatzelements 1 dargestellt. Gemäß dieser Ausführungsform ist das Aufsatzelement mit einem abgeflachten Bereich 1a ausgebildet, wodurch das Innengewinde 2 asymmetrisch bezüglich des Aufsatzelements 1 angeordnet ist. Mit einer derartigen Ausgestaltung ist es möglich, auch Löcher in der Umgebung von Kantenbereichen 21c eines Bauteils 21 zu vermessen. Es sei angemerkt, daß gemäß der Ausführungsform der Fig. 3 das Aufsatzelement 1 ohne Auflagering ausgebildet ist. Es ist auch möglich, die Ausführungsform der Fig. 3 mit (hier nicht dargestellten) Fasen bzw. Auflageringen, wie sie beispielsweise in Fig. 1 dargestellt sind, auszubilden. Ferner ist die mit dem Aufsatzelement 1 zusammenwirkende Fixierschraube 11 nur teilweise dargestellt. Der abgeflachte Bereich ist beispielsweise mittels Abfräsen des Aufsatzelementes 1 herstellbar.

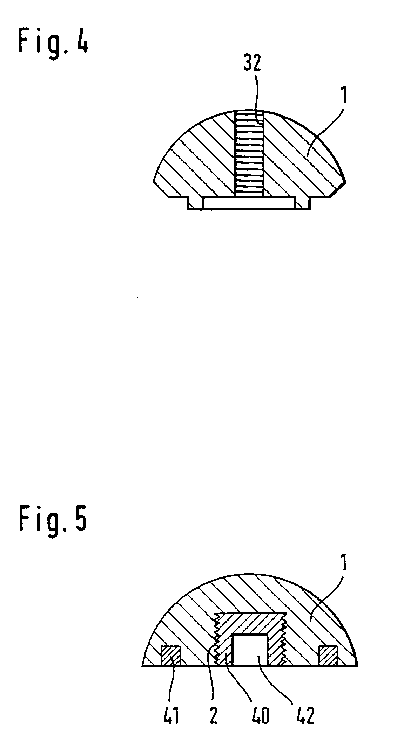

Das in Fig. 4 dargestellte Aufsatzelement 1 weist ein als Durchgangsgewinde 32 ausgebildetes Innengewinde auf. Mit einem derartigen Innengewinde ist es möglich, Bolzen bzw. Fixierschrauben-Gewindeabschnitte beliebiger Länge zu vermessen.

In Fig. 5 ist eine bevorzugte Ausführungsform einer erfindungsgemäßen Vorrichtung zur Positionsbestimmung oder Ausmessung eines Bolzens, insbesondere eines Schweißbolzens, dargestellt. Das Aufsatzelement 1 ist auch hier mit einem Innengewinde 2 ausgebildet. Eine mit einem Außengewinde ausgebildete Fixierbuchse 40 ist in das Innengewinde 2 einschraubbar. Die Fixierbuchse 40 weist eine Aussparung 42 auf, deren Form einem zu vermessenden (nicht dargestellten) Bolzen angepaßt ist. Die Fixierbuchse 40 kann auch mit einer durchgehenden Aussparung ausgebildet sein, und beispielsweise mit einem Durchgangsloch des Aufsatzelementes, wie es in Fig. 4 dargestellt ist, zusammenwirken. Zur Gewährleistung eines guten Festsitzes an dem Bolzen weist das Aufsatzelement 1 einen als Magnetring ausgebildeten magnetischen Einsatz 41 auf. Durch entsprechende Auswechslung der Fixierbuchsen 40 ist in einfacher Weise eine Anpassung an verschiedene Bolzendurchmesser bzw. Bolzenformen möglich. Mittels eines (nicht dargestellten) Schlitzes in der Fixierbuchse 40 ist, beispielsweise unter Verwendung eines Schraubendrehers, in einfacher Weise ein Auswechseln der Fixierbuchse durchführbar. Die Vorrichtung gemäß Fig. 5 ist sowohl auf glatte Bolzen (Schweißbolzen) als auch Gewindebolzen aufschiebbar. Die dargestellte Vorrichtung kann ebenfalls mit (nicht dargestellten) Auflageringen, Fasen oder Rändelungen ausgebildet sein.

## Patentansprüche

1. Aufsatzelement zur Positionsbestimmung oder Ausmessung eines an einem Bauteil ausgebildeten Loches oder Bolzens, insbesondere eines Schweißbolzens oder Gewindebolzens, welches auf einer ersten Seite des Bauteils auf eine das Loch oder den Bolzen umgebende Bauteiloberfläche aufbringbar ist,
**dadurch gekennzeichnet,**
daß das Aufsatzelement (1) ein mit einer von einer zweiten Seite des Bauteils in das Loch einbringbaren Fixierschraube zur Fixierung des Aufsatzelementes (1) an dem Bauteil unter Einklemmung des Bauteils zwischen dem Aufsatzelement (1) und der Fixierschraube bzw. mit dem Bolzen oder einer dem Außendurchmesser des Bolzens angepaßten Fixierbuchse (40) verschraubbares Innengewinde (2, 32) aufweist.

2. Aufsatzelement nach Anspruch 1, dadurch gekennzeichnet, daß es eine im wesentlichen halbkugelförmige oder teilkugelförmige Außenkontur aufweist.

3. Aufsatzelement nach einem der Ansprüche 1 oder 2, dadurch gekennzeichnet, daß es an seiner Unterseite (5) einen Auflagering (3) aufweist.

4. Aufsatzelement nach einem der vorstehenden Ansprüche, dadurch gekennzeichnet, daß es an seiner Unterkante eine Fase (4) aufweist.

5. Aufsatzelement nach einem der vorstehenden Ansprüche, dadurch gekennzeichnet, daß das Innengewinde (2, 32) bezüglich des Aufsatzelements (1) asymmetrisch angeordnet ist.

6. Aufsatzelement nach einem der vorstehenden Ansprüche, dadurch gekennzeichnet, daß das Innengewinde als Durchgangsgewinde (32) ausgebildet ist.

7. Aufsatzelement nach einem der vorstehenden Ansprüche, dadurch gekennzeichnet, daß sie einen Einsatz (41), insbesondere einen ringförmigen Einsatz, aus einem magnetischen Material aufweist.

8. Vorrichtung zur Positionsbestimmung oder Ausmessung eines Loches in einem Bauteil, insbesondere einem Karosserieteil eines Kraftfahrzeugs, gekennzeichnet durch ein Aufsatzelement (1) gemäß einem der Ansprüche 1 bis 7 sowie eine mit dem Innengewinde (2, 32) des Aufsatzelements (1) zusammenwirkende Fixierschraube (11), wobei das Aufsatzelement (1) auf einer ersten Seite des Bauteils auf eine das Loch umgebende Bauteiloberfläche aufbringbar, und die Fixierschraube (11) von einer zweiten Seite des Bauteils zur Fixierung des Aufsatzelementes (1) an dem Bauteil unter Einklemmung des Bauteils zwischen dem Aufsatzelement (1) und der Fixierschraube (11) in das Loch einbringbar und mit dem Innengewinde (2, 32) des Aufsatzelementes (1) verschraubbar ist.

9. Vorrichtung nach Anspruch 8, dadurch gekennzeichnet, daß die Fixierschraube (11) einen konisch zulaufenden Abschnitt (13) aufweist.

10. Vorrichtung zur Positionsbestimmung oder Ausmessung eines Bolzens an einem Bauteil, insbesondere einem Karosserieteil eines Kraftfahrzeugs, gekennzeichnet durch ein Aufsatzelement (1) gemäß einem der Ansprüche 1 bis 7 sowie eine mit dem Innengewinde (2) des Aufsatzelements verschraubbaren Fixierbuchse (40), welche eine der Form bzw. dem Durchmesser des Bolzens entsprechende Ausnehmung aufweist.
